# EUROPEAN PATENT APPLICATION

(11) **EP 2 184 669 A1**
(43) Date of publication of application: **12.05.2010**
(21) Application number: 08167952.4
(22) Date of filing: 30.10.2008
(51) Int. Cl.: G06F 3/048

(54) **Portable electronic device and method of controlling same**

(71) Applicant: Research In Motion Limited, Waterloo, Ontario N2L 3W8 (CA)
(72) Inventor: Lee, John Jong-Suk, Thornhill Ontario L4J 8G4 (CA)
(74) Representative: Hollywood, Jane Constance

(57) **Abstract**

A method of controlling a portable electronic device having a touch screen display includes rendering a graphical user interface including a character entry portion and a display portion, the character entry portion having a selection area and a character display area, the character display area having a plurality of characters arranged proximal the selection area on the touch screen display. The method also includes detecting a touch event at a first location at or proximal one of the characters at the character entry portion, determining the one of the characters, detecting a movement of the touch event to a second location, and selecting said character if the second location falls within the selection area.

## Description

The present disclosure relates generally to portable electronic devices including touch screen display devices with virtual keyboards.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Portable electronic devices such as PDAs or smart telephones are generally intended for handheld use and ease of portability. Smaller devices are generally desirable for portability. A touch screen display device for input and output is particularly useful on such handheld devices as such handheld devices are small and are therefore limited in space available for user input and output devices. Further, the screen content on the touch screen display devices can be modified depending on the functions and operations being performed.

With decreasing size of portable electronic devices, user-selectable features such as keys of a virtual keyboard displayed on the touch screen display may be limited in size. User-selection of keys that are small enough to fit the touch screen display of such devices can be difficult as the keys are small and the user's finger can be inexact. Thus, selection errors may be made, requiring correction and causing user dissatisfaction.

Improvements in touch screen devices are therefore desirable.

### BRIEF DESCRIPTION OF THE DRAWINGS

Embodiments of the present disclosure will now be described, by way of example only, with reference to the attached Figures, wherein:

Figure 1 is a block diagram of a portable electronic device according to one example;

Figure 2 is a front view of an exemplary portable electronic device shown in a landscape orientation and showing hidden detail in ghost outline;

Figure 3 is a simplified sectional side view of the portable electronic device of Figure 2, with a switch shown in a rest position;

Figure 4 is a simplified sectional side view of the portable electronic device of Figure 2 with the switch shown in an actuated position;

Figure 5 is a front view of the portable electronic device of Figure 2 shown in a portrait orientation and showing a screen rendered in a GUI according to one example;

Figure 6 is a flow chart showing a method for controlling an electronic device according to an embodiment;

Figures 7 to 9 are front views of the portable electronic device of Figure 2 shown in the portrait orientation and showing screens rendered in a GUI in an example of the method of Figure 6;

Figures 10 and 11 are front views of the portable electronic device of Figure 2 shown in the portrait orientation and showing further screens rendered in the GUI according to an example.

### GENERAL

According to an aspect, there may be provided a method of controlling a portable electronic device having a touch screen display. The method may comprise rendering a graphical user interface including a character entry portion and a display portion, the character entry portion having a selection area and a character display area, the character display area having a plurality of characters arranged proximal the selection area on the touch screen display. The method may also comprise detecting a touch event at a first location at or proximal one of the characters at the character entry portion, determining the one of the characters, detecting a movement of the touch event to a second location, and selecting said character if the second location falls within the selection area.

According to another aspect, there may be provided a portable electronic device. The portable electronic device may have a display device for rendering a graphical user interface including a character entry portion and a display portion, the character entry portion having a selection area and a character display area, the character display area having a plurality of characters arranged proximal the selection area. The portable electronic device may also have a touch-sensitive input device including an overlay disposed on the display device and a controller connected to the overlay, and functional components including a memory device and a processor connected to the display device, the touch-sensitive input device, the switch and the memory device, the memory device for storage of computer-readable program code executable by the processor for detecting a touch event at a first location at or proximal one of the characters at the character entry portion, determining the one of the characters, detecting a movement of the touch event to a second location, and selecting said character if the second location falls within the selection area.

According to yet another aspect, there may be provided a computer-readable medium having computer-readable code embodied therein for execution by a processor for rendering a graphical user interface including a character entry portion and a display portion, the character entry portion including a selection area and a character display area, the character display area having a plurality of characters arranged proximal the selection area on a touch screen display, detecting a touch event at a first location at or proximal one of the characters at the character entry portion, determining the one of the characters, detecting a movement of the touch event to a second location, and selecting said character if the second location falls within the selection area.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a touch screen display and to a portable electronic device including a touch screen display. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

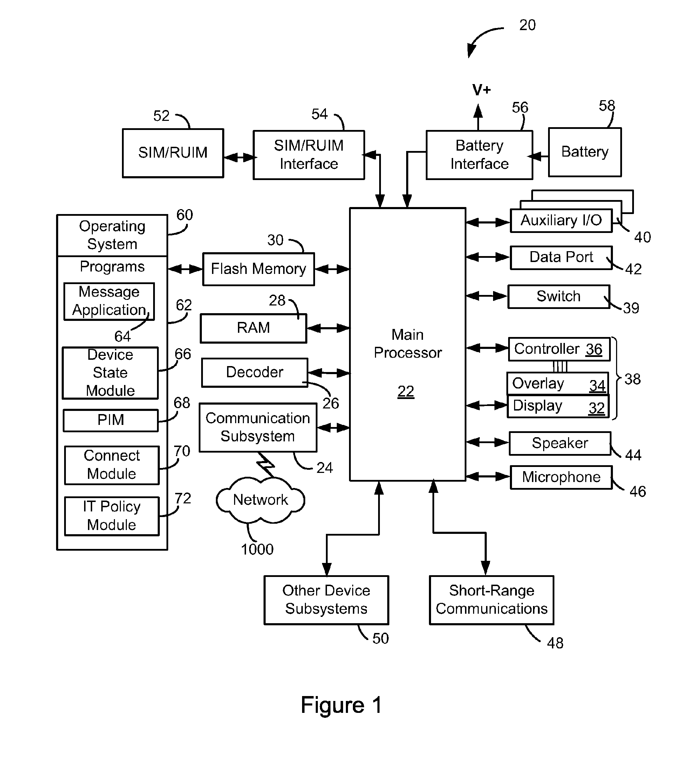

Referring first to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards such as Enhanced Data GSM Environment (EDGE) and Universal Mobile Telecommunications Service (UMTS) are believed to have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 that together make up a touch screen display 38, an electronic controller 36 connected to the touch-sensitive overlay 34, a switch 39, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary I/O subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

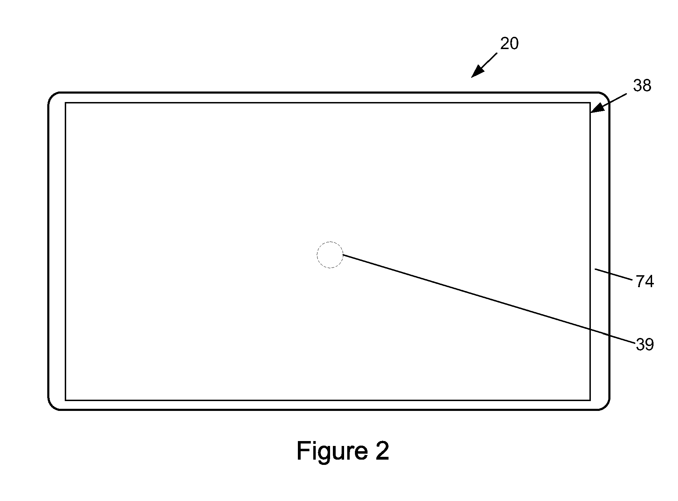

Reference is now made to Figures 2 to 4, which show a front view in a landscape orientation as well as simplified sectional side views of an exemplary portable electronic device 20. The portable electronic device 20 includes the display 32 for rendering a graphical user interface including a character entry portion and a display portion, the character entry portion comprising a selection area and a character display area, the character display area includes a plurality of characters arranged proximal the selection area.

A touch-sensitive input device includes the touch-sensitive overlay 34 disposed on the display 32 and the controller 36 (shown in Figure 1) connected to the touch-sensitive overlay 34. The touch-sensitive input device is for providing a touch-sensitive area on the display 32, for detecting a touch event on the display 32. Functional components are provided including the processor 22 connected to the display 32 and touch-sensitive input device including the touch-sensitive overlay 34 and the controller 36, and a memory device, which in the present example is the flash memory 30 for storage of computer-readable program code executable by the processor 22 for detecting a touch event at a first location at or proximal the selection area at the character entry portion, determining the one of the characters, detecting movement of the touch event to a second location and selecting the character if the second location falls within the selection area.

The portable electronic device 20 shown in Figures 2 to 4 includes the touch screen display 38, which is framed by a housing 74 that houses the internal components shown in Figure 1. As indicated, the housing 74 frames the touch screen display 38 such that the touch-sensitive overlay 34 is exposed for user interaction with the graphical user interface rendered on the LCD display 32. In the present example, user interaction with the graphical user interface is performed through the use of the touch-sensitive overlay 34. Thus, a graphical user interface that includes a character entry portion and a display portion is provided via the touch screen display 38 for entry of data, for example, for composing an electronic message in the message application 64, for creating and storing PIM data, for entry of characters in the Internet browser application, or for any other suitable application.

The housing 74 includes a back 76 and a frame 78 spaced from the back 76 that frames the touch screen display 38. Sidewalls 80 extend generally perpendicularly to the back 76, between the back 76 and the frame 78. The back 76 can include a plate (not shown) that is releasably attached for insertion and removal of, for example, the battery 68 and the SIM card 62 described above with reference to Figure 1. It will be appreciated that the back 76, the frame 78 and the sidewalls 80 can be injection molded, for example. The frame 78 is sized and shaped to frame a window in which the touch screen display 38 is exposed for input and for displaying output. In the exemplary portable electronic device 20 shown in Figure 2, the frame 78 is generally rectangular with rounded corners although other shapes are possible.

A base 82 extends between the sidewalls 80, generally parallel to the back 76 and the frame 78 for supporting the switch 39. The base 82 can be any suitable base and can include, for example, a printed circuit board or flex circuit board. Thus, the base 82 can also provide mechanical support and electrical connection for electronic components for the portable electronic device 20. In the present example, the switch 39 is supported on one side of the base (printed circuit board) while the opposing side provides mechanical support and electrical connection for other components (not shown) of the portable electronic device 20.

The touch screen display 38 can be any suitable touch screen display. In one embodiment, the touch screen display 38 is a capacitive touch screen display 38. Thus, the capacitive touch screen display 38 includes the display 32 and the touch-sensitive overlay 34, which in the present example is a capacitive touch-sensitive overlay 34. It will be appreciated that the capacitive touch-sensitive overlay 34 includes a number of layers in a stack and is fixed to the display 32 via a suitable optically clear adhesive. The layers can include, for example, a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. Each of the capacitive touch sensor layers can be, for example, a layer of patterned indium tin oxide (ITO)

In the capacitive touch-sensitive overlay example, the X and Y location of a touch event can both be determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 (shown in Figure 1) as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touch screen display 38 can be determined. For example, the size and the shape of the touch on the touch screen display 38 can be determined in addition to the location (X and Y values) based on the signals received at the controller 36 from the touch sensor layers.

Referring to Figure 2, for example, it will be appreciated that a user's touch on the touch screen display 38 is determined by determining the X and Y touch location and user-selected input is determined based on the X and Y touch location and the application executed by the processor 22. Thus a feature or virtual button rendered on the touch screen display 38 may be selected by matching the feature or button to the X and Y location of a touch event on the touch screen display 38. A feature or button can be selected based on the X and Y touch location and based on the application.

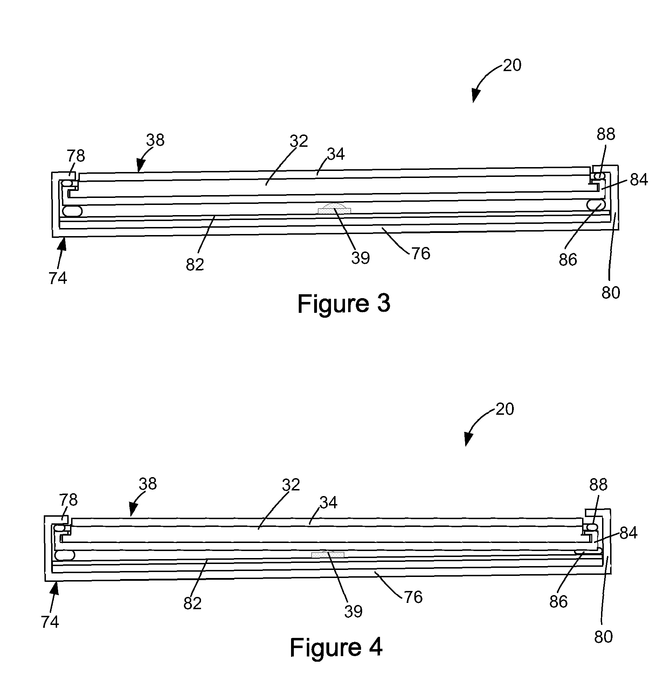

The display 32 and the touch-sensitive overlay 34 are supported on a support tray 84 of suitable material such as magnesium for providing mechanical support to the display 32 and touch-sensitive overlay 34. The display 32 and touch-sensitive overlay 34 are biased away from the base 82, toward the frame 78 by biasing elements 86 such as gel pads between the support tray 84 and the base 82. Compliant spacers 88, which can also be in the form of gel pads for example, are located between an upper portion of the support tray 84 and the frame 78. The touch screen display 38 is moveable within the housing 74 as the touch screen display 38 can be moved toward the base 82, thereby compressing the biasing elements 86. The touch screen display 38 can also be pivoted within the housing 74 with one side of the touch screen display 38 moving toward the base 82, thereby compressing the biasing elements 86 on the same side of the touch screen display 38 that moves toward the base 82, as shown in Figure 4.

As indicated, the switch 39 is located between the base 82 and the support tray 84 of the portable electronic device 20. The switch 39 can be any suitable mechanical switch such as a dome-type switch and can be centered with respect to the touch screen display 38. The switch 39 is located such that displacement of the touch screen display 38 resulting from a user pressing the touch screen display 38 with sufficient force to overcome the bias and to overcome the actuation force for the switch 39, causes actuation of the switch 39, by depression of the mechanical switch. In the present embodiment the switch 39 is in contact with the support tray 84. Thus, depression of the touch screen display 38 by user application of a force thereto, causes actuation of the switch 39, thereby providing the user with a positive tactile quality during user interaction with the user interface of the portable electronic device 20. When the applied pressure is removed from the touch screen display 38 as the user lifts his or her finger from contact, the touch screen display 38 returns to the rest position. The switch 39 is not actuated in the rest position, absent the applied pressure from the user, as shown in Figure 4. Thus, tactile feedback is provided when applying pressure and when removing the applied pressure on the touch screen display 38. It will be appreciated that the switch 39 can be actuated by pressing anywhere on the touch screen display 38 to cause movement of the touch screen display 38 in the form of movement parallel with the base 82 or pivoting of one side of the touch screen display 38 toward the base 82, as shown in Figure 4. Although a single switch is shown any suitable number of switches can be used and can be located in any suitable position.

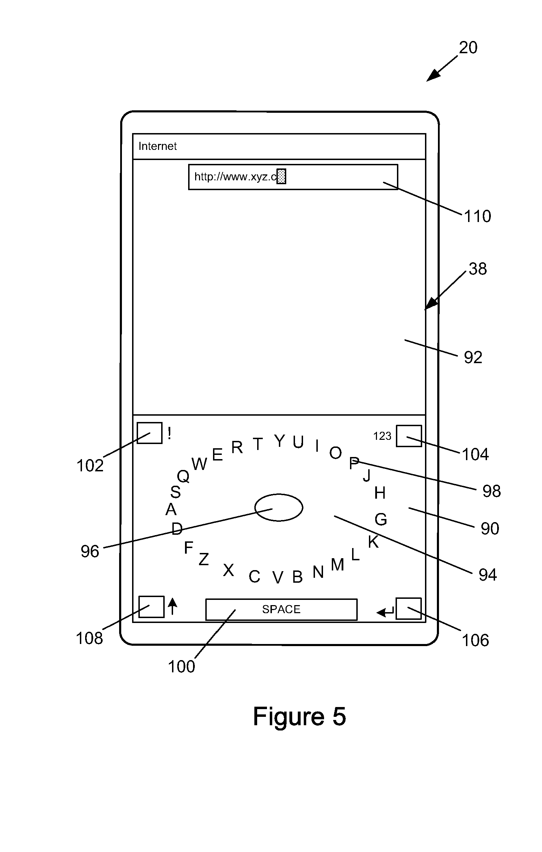

Referring now to Figure 5, there is shown a front view of the exemplary portable electronic device shown in a portrait orientation with a graphical user interface. In the present example, the touch screen display 38 is a capacitive touch screen display 38 as described above. As shown, the GUI provides a character entry portion indicated generally by the numeral 90 and a display portion indicated generally by the numeral 92. The character entry portion 90 is for user-selection of characters for entry of data in the form of letters, numerals, punctuation or any suitable symbol. The display portion 92 is provided for display of, for example, data entered using the character entry portion 90 in conjunction with any suitable application.

The character entry portion 90 of the GUI includes a character display area 94 and a selection area 96 that in the present embodiment is located generally centrally within the character display area 94. The character display area 94 includes a plurality of characters 98 arranged in an elliptical formation around and spaced from the selection area 96. The selection area 96 can also be elliptical as shown in the present embodiment. Any suitable arrangement of characters in the character display area 94 and shape of selection area 96 is possible, however. In the exemplary screen shown in Figure 5, the plurality of characters 98 includes each of the letters of the alphabet. A space bar button 100 is located under the elliptical formation of the plurality of characters 98 in the portrait orientation shown in Figure 5 for user-selection of a space by touch contact with the touch screen display 38 at the space bar button 100.

Four buttons 102, 104, 106, 108 are assigned functions with each of the four buttons 102, 104, 106, 108 located at a respective corner of the character display area 94. The four buttons 102, 104, 106, 108 can include, for example, a button 102 for rendering symbols, a button 104 for rendering numerals, an "enter" button 106, and a shift button 108 assigned the function of capitalizing letters. Thus, a user touch event at the button 104 for rendering numerals results in a character display area 94 in which the plurality of characters 98 includes numerals from 0 to 9 for user-selection rather than letters. Similarly, a user touch event at the button 102 for rendering symbols results in a character display area 94 in which the plurality of characters 98 includes symbols for user-selection rather than letters or numerals. The "enter" button 106 is user-selectable for selection of an "enter" or return function. The number of buttons and the functions assigned to these buttons can differ. For example, one of the buttons can be assigned a delete function. In another example, another one of the buttons can be assigned a backspace function.

Thus, a plurality of characters are provided in the character display area 94 and can be selected for entry. Buttons can also be provided and can have assigned functions such as buttons 102, 104, 106, 108 for rendering symbols, rendering numerals, for selection of an enter function or selection of a shift function. A separate space bar button 100 can also be provided. Such a character entry portion 90 of a GUI is useful in typing, for example, a message, for entry of PIM data, for use in an Internet browser application or any other suitable application. Thus the GUI, including the plurality of characters 98 arranged around the selection area 96 is provided.

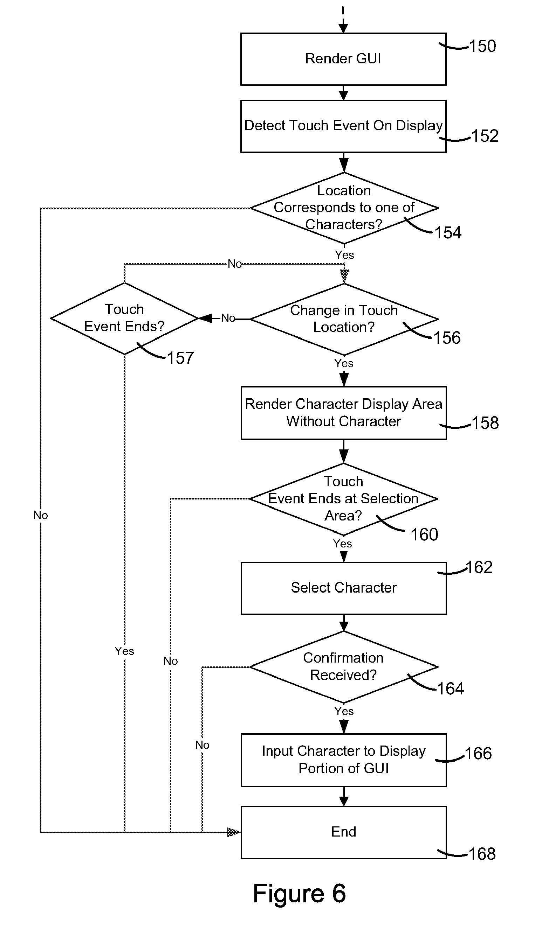

Reference is now made to Figure 6 to describe a method of controlling an electronic device 20 according to an embodiment. A graphical user interface is rendered on the display 32 and includes user-selectable features such as the plurality of characters provided in the character display area 94 for selection using the touch-sensitive overlay 34 (step 150). The graphical user interface can be provided in any suitable application, such as the message application 64 during composition of a message, for example.

A touch event is detected upon user touching of the touch screen display 38. Such a touch event can be determined upon a user touch at the touch screen display 38 for selection of, for example, a character from the plurality of characters 98 (step 152). Signals are sent from the touch-sensitive overlay 34 to the controller 36 when a suitable object such as a finger or other conductive object held in the bare hand of a user, is detected. Thus, the touch event is detected. The X and Y location of the touch are determined upon detection of the touch event and it is determined if the X and Y location of the touch correspond to one of the plurality of characters 98 (step 154). Thus, it is determined if the X and Y location of the touch corresponds to one of the plurality of characters 98 rendered in the character entry portion 90 on the display 32. If the X and Y location of the touch corresponds with the location of any one of the plurality of characters 98, the process proceeds to step 156. Otherwise, the process ends (step 168).

It is determined at step 156 if there is any change in the touch location by determining if there is a change in the X and Y co-ordinates from the X and Y location of the touch at the time that the touch event is detected at step 152. If there is a change in the touch location, the process proceeds to step 158. Otherwise, it is determined if the touch event ends (step 157). If the touch event ends, the process ends (step 168). If, on the other hand, the touch event does not end, the process returns to step 156. Thus, the location of touch is monitored to determine if there is a change in the location of touch or if the touch event ends.

In response to detection of the change of the touch location, the one of the plurality of characters 98 that corresponds with the X and Y location of the touch as determined at step 154 can be removed from the plurality of characters 98 rendered around the selection area 96 (step 158). The one of the plurality of characters 98 that corresponds with the X and Y location of the touch can be removed by rendering a similar screen of the GUI with the one of the characters absent or moved, along with the finger of the user, on the touch screen display 38.

The X and Y location of the touch when the touch event ends (when the user lifts his or her finger) is determined. The X and Y location of the touch are determined when the touch event ends and it is determined if the X and Y location of the touch at the end of the touch event falls within the selection area 96. Thus, if the X and Y values of the touch at the end of the touch event fall within the selection area 96 (step 160), the one of the plurality of characters 98 determined at step 154 is selected (step 162). The one of the plurality of characters 98 can therefore be indicated as selected in any suitable manner such as by rendering the one of the plurality of characters 98 in the selection area 96 or by, for example rendering the one of the plurality of characters 98 highlighted in the character display area 94. If, on the other hand, the X and Y values of the touch at the end of the touch event do not fall within the selection area 96, the process ends.

In the exemplary embodiment, a determination can be made whether or not confirmation of the selected one of the plurality of characters 98 is received by receipt of a signal from the switch 39 (step 164). A further touch event on the touch screen display 38 with application of a force sufficient to overcome the bias and to overcome the actuation force for the dome-type switch 39 results in actuation and a signal can be received at the processor 22 from the switch 39 thereby confirming selection. If the signal is not received, the selection of the key is not confirmed and the process ends (step 168).

The associated character is then input, for example, added in an electronic mail application, Internet browser application or other suitable application (step 166).

It will be appreciated that the method shown and described with reference to Figure 6 is simplified for the purpose of the present explanation and other steps and substeps may be included. Furthermore, steps are shown for exemplary purposes and some of the steps shown may not be necessary. For example, after selection of the character at step 162, the process can proceed directly to step 166.

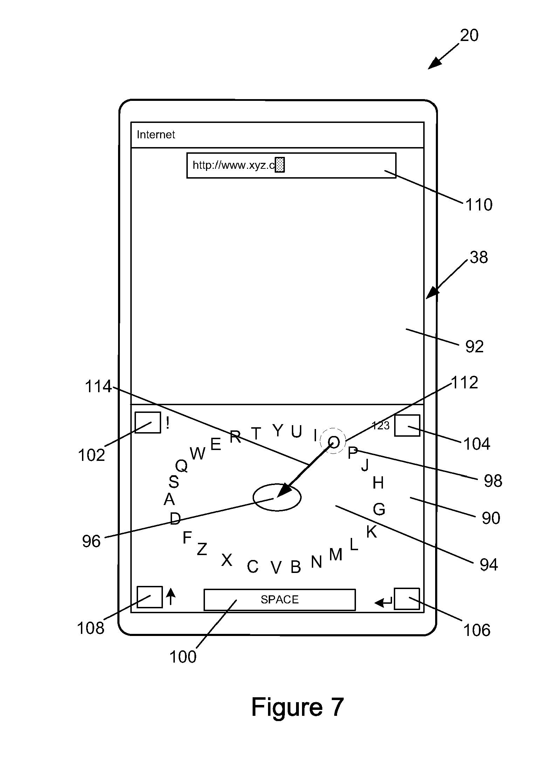

Referring now to Figure 6 and to 7, a GUI is rendered, which in the example shown in Figure 7 is an Internet browser GUI and the character entry portion 90 of the GUI is provided for data entry in the Internet browser GUI. In the present embodiment, a URL, "http://www.xyz.c" is entered in an Internet browser URL field 110. Thus the GUI is rendered on the display 32 and includes user-selectable features such as the plurality of characters provided in the character display area 94 for selection using the touch-sensitive overlay 34 (step 150). The next character to be entered in the Internet browser URL field 110 is the letter "o".

A touch event is detected upon user touching of the touch screen display 38 for selection of, for example, the letter "o" from the plurality of characters 98 (step 152). The X and Y location of the touch are determined upon detection of the touch event and it is determined that the X and Y location of the touch correspond to the letter "o" of the plurality of characters 98 (step 154). The user therefore touches the touch screen display 38 at a position at which the "o" is rendered. The location of touch is indicated generally by the numeral 112.

It is determined at step 156 that there is a change in the location of touch by determining a change in the X and Y co-ordinates from the X and Y location of the touch at the time that the touch event is detected at step 152. Thus, touch contact with the touch screen display 38 that is maintained during dragging of the finger, such as dragging in the direction of the arrow 114, can be detected.

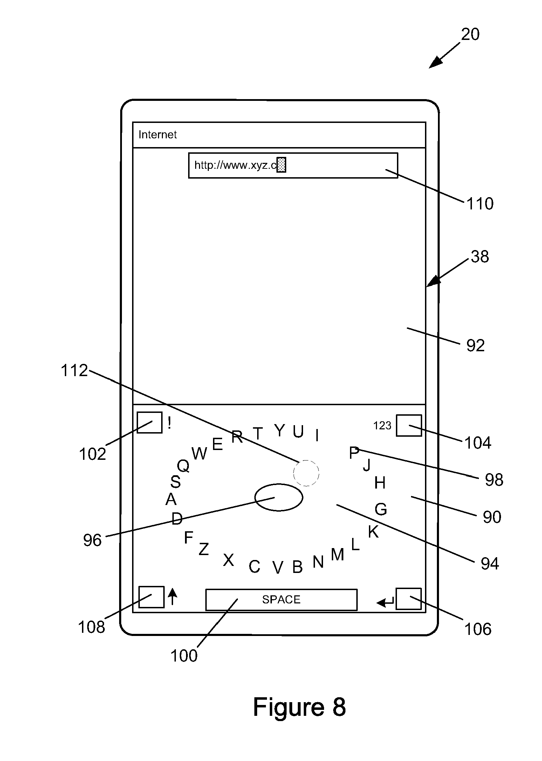

With the detection of the change of the location of touch, the letter "o" that corresponds with the X and Y location of the touch as determined at step 154 is removed from the plurality of characters 98 rendered around the selection area 96 as shown for exemplary purposes in Figure 8 (step 158) in which the location of touch 112 has moved from that shown in Figure 7, toward the selection area 96.

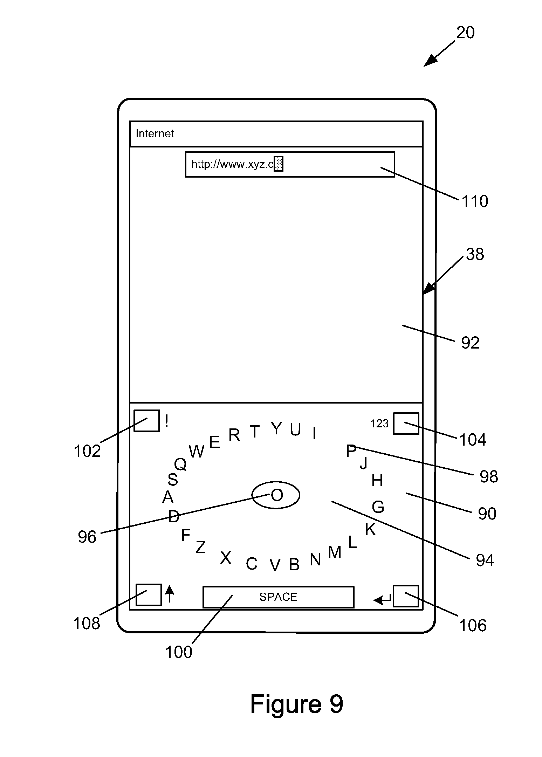

In the present example, the X and Y location of the touch when the touch event ends (when the user lifts his or her finger) is determined to fall within the selection area 96 (step 160). Thus, the letter "o" is selected (step 162). The letter "o" can therefore indicated as selected by one of the plurality of characters 98 can therefore be indicated as selected by, for example rendering the letter "o" in the selection area 96 as shown in Figure 9.

Confirmation of the selection of the letter "o" can then be received (step 164). In the present example, the confirmation can be received as a result of a further touch event on the touch screen display 38 with sufficient application of force to overcome the bias of the touch screen display and to overcome the actuation force for the dome-type switch 39, resulting in actuation of the switch 39, thereby confirming selection.

The letter "o" is then added in the URL field 110 of the Internet Browser GUI (step 166).

In another embodiment, a character can be selected when the touch location is determined to be within the selection area 96, rather than when the touch event ends. The switch can be actuated after the change in touch location to the selection area 96 and prior to the end of the touch event for confirmation. Therefore, the user initiates the touch event, drags his or her finger on the touch-sensitive overlay from the desired character to the selection area 96 and then presses on the touch-sensitive overlay with sufficient force to overcome the force for actuating the switch. The actuation of the switch thereby confirms selection of the character.

As indicated above, The GUI rendered at step 150 can include buttons with each button having an assigned function or character, for example. In the embodiment shown in Figure 5, four buttons 102, 104, 106, 108 are assigned functions with each of the four buttons 102, 104, 106, 108 located at a respective corner of the character display area 94.

A touch event detected at the "enter" button 106 results in selection of an "enter" or return function. A touch event detected at the shift button 108 results in selection of a "shift" function, for capitalizing letters, for example.

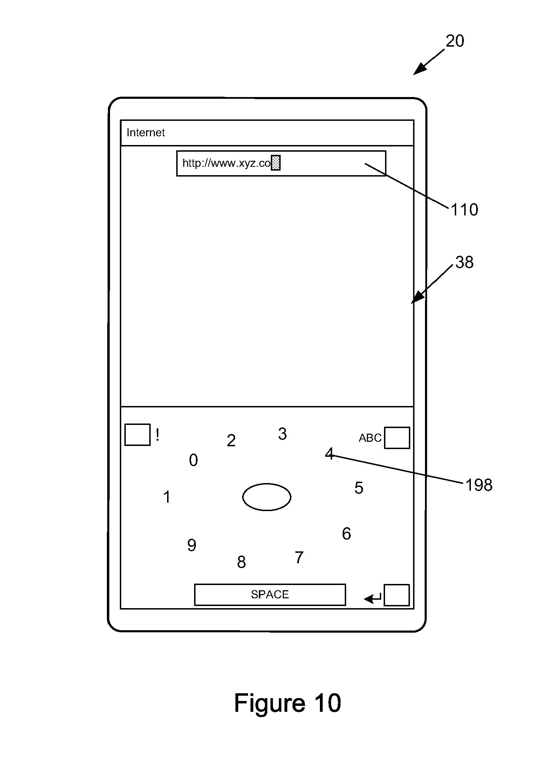

A touch event detected at the button 104 for rendering numerals results in a character display area 94 in which a plurality of characters 198 includes numerals from 0 to 9 for user-selection rather than letters, as shown, for example in Figure 10. It will be appreciated that fewer or additional buttons can be rendered and further, the buttons rendered can differ from those described above. Control of the portable electronic device 20 is similar to that described above with reference to Figure 6 and therefore need not be described again in detail. It will now be appreciated that any of the characters 198 can be selected and added in a suitable field of the graphical user interface.

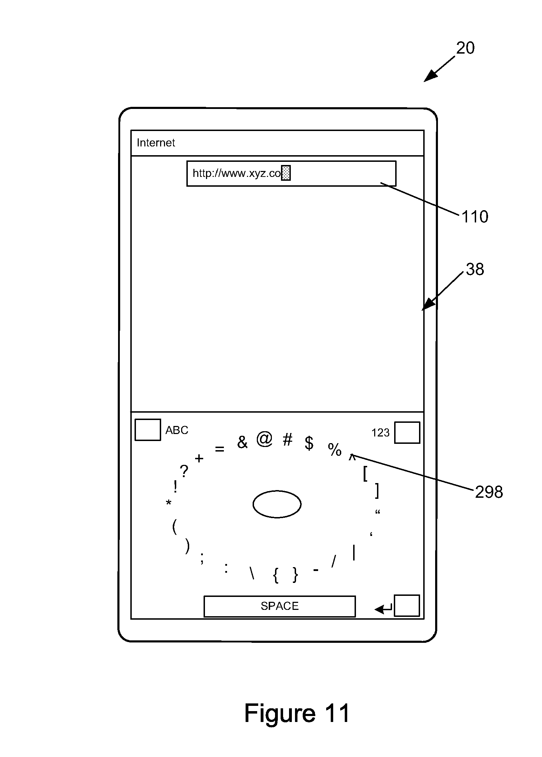

Similarly, a touch event detected at the button 102 for rendering symbols results in a character display area 94 in which a plurality of characters 298 includes symbols for user-selection rather than letters or numerals, as shown, for example in Figure 11. Again, it will be appreciated that fewer or additional buttons can be rendered and further, the buttons rendered can differ from those described above. Control of the portable electronic device 20 is similar to that described above with reference to Figure 6 and therefore need not be described again in detail. It will now be appreciated that any of the characters 298 can be selected and added in a suitable field of the graphical user interface.

The exemplary portable electronic device shown and described herein can be calibrated for use. For example, a left half of the touch screen display 38 can be calibrated for left-hand use and the right half of the touch screen display 38 can be calibrated for right-hand use. Thus, the device is calibrated to correlate a target touch location with an actual touch location to aid in accuracy of typing. Calibration of each half of the touch screen display 38 with each hand aids in correction of differences in target touch location and actual touch location for each hand. Alternatively, the entire keyboard can be calibrated for use with a single hand.

In other embodiments, other shapes and sizes of portable electronic devices and other GUIs including other arrangements of the plurality of characters may be provided.

A GUI can therefore be rendered that includes a character entry portion and a display portion. The character entry portion can include a plurality of the characters around a selection area permitting selection of any of the characters. Thus, many characters can be rendered in the character entry portion rather than providing a keyboard with many keys to which characters are assigned. The rendering of the characters around a selection area and the control of the portable electronic device for selection of characters permits the entry of characters in a very reduced space as compared to the space required for a keyboard in which multiple keys are necessary for selection of characters. Further, each character can be dragged from the plurality of characters, providing a visual aid to the user prior to selection. Further, a user can drag his or her hand over the touch screen display without selecting a character unless the touch event ends at the relatively small selection area. Further still, selection of a character can be confirmed prior to entry into a field in the display portion of the GUI. The selection can be confirmed by receipt of a signal from actuation of a switch such as a button or dome-type switch between the touch screen display and a base of the electronic device. Thus, a user pressing on the touch screen display with enough force to depress the touch screen display and to overcome a minimum force for actuation, causes actuation of the button or dome-type switch, thereby confirming selection of the character. Thus, the selected character can be indicated by, for example, rendering in the selection area prior to confirmation and therefore prior to entry into the display portion of the graphical user interface. The process permits the use of a very small area on the touch screen for entry of data in the form of characters by comparison to what is required for a keyboard or keypad for example, while ensuring that selection is confirmed by depression with sufficient force to actuate the button or switch. Incorrect selections and entry can thereby be significantly reduced while providing a character entry portion of the GUI that is smaller in size than required for a keyboard or keypad. It will also be appreciated that the switch provides a desirable tactile feedback in the form of a button-type click feel for to the user, aiding the user in determining when a selection has been confirmed and further reducing the chance of erroneous input by providing this confirmation. Further still, incorrect selections resulting from, incidental contact with the touch screen display such as, for example, a user's face touching the touch screen display when using the device in a cellular telephone mode can also be reduced, saving device use time required for correction, thereby reducing power requirements and increasing user satisfaction.

The addition of buttons to which functions are assigned provides for further characters for selection without unnecessarily cluttering the character display area with too many characters for accurate selection. The buttons for such functions can be located at otherwise unused areas of the character entry portion of the GUI, permitting further reduction of the character entry portion while still providing full functionality. The reduction in the character entry portion permits a larger display portion on the touch screen display. Thus, further data can be displayed with less navigation than would be required with a smaller display portion, again saving device use time, reducing power requirements and increasing user satisfaction.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

## Claims

1. A method of controlling a portable electronic device having a touch screen display, the method comprising:
rendering a graphical user interface 'GUI' having a character entry portion and a display portion, the character entry portion comprising a selection area and a character display area, the character display area comprising a plurality of characters arranged proximal the selection area on the touch screen display;
detecting a touch event at a first location at or proximal one of the characters at the character entry portion;
determining the one of the characters;
detecting a movement of the touch event to a second location; and
selecting said character if the second location falls within the selection area.

2. The method according to claim 1, comprising receiving a confirmation of selection after selecting said character.

3. The method according to claim 2, wherein said receiving confirmation of selection comprises receiving an input from a switch.

4. The method according to claim 3, wherein said receiving confirmation of selection comprises receiving input from actuation of the switch, the switch actuation resulting from user-depression of the touch screen display.

5. The method according to claim 3, comprising rendering said character in said selection area prior to confirmation.

6. The method according to any one of claims 2 to 5, comprising entering the character in the display portion of the graphical user interface in response to receiving the confirmation.

7. The method according to any one of the preceding claims, comprising removing the one of the characters from the character display area in response to detecting the movement.

8. The method according to any one of the preceding claims, wherein said plurality of characters are arranged around the selection area.

9. The method according to claim 8, wherein said selection area comprises an oval area outlined for user-identification.

10. The method according to claim 1 comprising entering the character in the display portion of the of the graphical user interface in response to selecting said character.

11. The method according to any one of the preceding claims, comprising rendering at least one virtual button on said graphical user interface for changing the plurality of characters arranged proximal the selection area to a second plurality of characters arranged proximal the selection area.

12. The method according to any one of the preceding claims, comprising rendering a virtual button for selecting a space.

13. The method according to any one of the preceding claims, comprising rendering an enter button on said GUI.

14. A portable electronic device comprising:
a display device for rendering a graphical user interface having a character entry portion and a display portion, the character entry portion comprising a selection area and a character display area, the character display area comprising a plurality of characters arranged proximal the selection area;
a touch-sensitive input device having an overlay disposed on the display device and a controller connected to the overlay; and
functional components comprising a memory device and a processor connected to the display device, the touch-sensitive input device, the switch and the memory device, the memory device for storage of computer-readable program code executable by the processor for causing the portable electronic device to implement the steps of the method of any one of claims 1 to 13.

15. A computer-readable medium having computer-readable code embodied therein for execution by a processor of a computing device for causing the computing device to implement the steps of the method of any one of claims 1 to 13.

## Amended claims

### Amended claims in accordance with Rule 137(2) EPC.

**1.** A method of controlling a portable electronic device (20) having a touch screen display (38), the method comprising:
rendering a graphical user interface 'GUI' having a character entry portion (90) and a display portion (92), the character entry portion (90) comprising a selection area (96) and a character display area (94) comprising a plurality of characters (98);
detecting a beginning of a touch event at a first location associated with a first character (112) of the plurality of characters (98);
detecting a continuation of the touch event to a second location at which the touch event ends; and
selecting the first character (112) when the second location falls within the selection area.

**2.** The method according to claim 1, comprising receiving a confirmation of selection after selecting the first character (112).

**3.** The method according to claim 2, wherein the receiving confirmation of selection comprises receiving an input from a switch (39).

**4.** The method according to claim 3, wherein the receiving confirmation of selection comprises receiving input from actuation of the switch (39), the switch actuation resulting from user-depression of the touch screen display (38).

**5.** The method according to claim 3, comprising rendering the first character (112) in the selection area (96) prior to confirmation.

**6.** The method according to any one of claims 2 to 5, comprising entering the first character (112) in the display portion (94) in response to receiving the confirmation.

**7.** The method according to any one of the preceding claims, comprising removing the first character (112) from the character display area (94) in response to detecting the movement.

**8.** The method according to any one of the preceding claims, wherein the plurality of characters (98) are arranged around the selection area (96).

**9.** The method according to claim 1, comprising rejecting the first character (112) when the second location falls outside the selection area (96).

**10.** The method according to claim 1 comprising entering the first character (112) in the display portion (92) of the of the graphical user interface in response to selecting the first character (112).

**11.** The method according to any one of the preceding claims, comprising rendering at least one virtual button on the graphical user interface adapted to change the plurality of characters arranged near the selection area to a second plurality of characters arranged near the selection area.

**12.** The method according to any one of the preceding claims, comprising rendering a virtual button (100) adapted to select a space.

**13.** The method according to any one of the preceding claims, comprising rendering an enter button on the GUI (106).

**14.** A portable electronic device (20) comprising:
a display device (32) adapted to render a graphical user interface having a character entry portion (90) and a display portion (92), the character entry portion (90) comprising a selection area (96) and a character display area (94) comprising a plurality of characters (98);
a touch-sensitive input device having an overlay (34) disposed on the display device (32) and a controller (36) connected to the overlay (34); and
functional components comprising a memory device (30) and a processor (22) connected to the display device (32), the touch-sensitive input device, and the memory device (30), the memory device (30) adapted to store computer-readable program code executable by the processor (22), the computer-readable program code causing a portable electronic device (20) to render the GUI, detect a touch event at a first location associated with a first character (112) of the plurality of characters (98), detect a continuation of the touch event to a second location at which the touch event ends, and select the first character (112) when the second location falls within the selection area.

**15.** A computer-readable medium embodying computer-readable code, the computer-readable code executable by a processor (22) of a computing device (20), the processor (22) causing the computing device (20) to implement the steps of the method of any one of claims 1 to 13.
